# FASCICULE DE BREVET EUROPEEN

(11) **EP 0 857 889 B1**
(45) Date de publication et mention de la délivrance du brevet: **12.12.2001**
(21) Numéro de dépôt: 98400192.5
(22) Date de dépôt: 29.01.1998
(51) Int. Cl.: F16H 1/16, F16H 3/00, E06B 9/76

(54) **Dispositif de renvoi d'angle à couple d'engrenages à rapport de réduction interchangeable**
Kegelrad-Winkelgetriebe mit einem Zahnradpaar mit auswechselbarem Übersetzungsverhältnis
Bevel gear drive with a pair of gears with interchangeable gear ratio

(30) Priorité: 07.02.1997 FR 9701449
(43) Date de publication de la demande: 12.08.1998
(73) Titulaire: ZURFLUH FELLER S.A., F-25150 Pont de Roide (FR)
(72) Inventeur: Steinbauer, Thierry, 90000 Belfort (FR)
(74) Mandataire: Armengaud Ainé, Alain

(56) Documents cités:
- FR-A- 2 107 630
- FR-A- 2 621 644
- GB-A- 2 104 166
- PATENT ABSTRACTS OF JAPAN vol. 7, no. 79 (M-204) [1224] , 31 mars 1983 & JP 58 005556 A (HINO JIDOSHA KOGYO), 12 janvier 1983,

## Description

La présente invention est relative à des perfectionnements apportés à des volets roulants. Elle vise plus particulièrement le mécanisme transmettant le mouvement de rotation issu d'une manivelle selon un axe déterminé, en un mouvement de rotation selon un axe généralement perpendiculaire, ce mouvement de rotation est transmis généralement à un treuil solidaire de l'arbre d'enroulement entraînant en translation le tablier du volet roulant.

Ces dispositifs généralement connus sous le nom de renvoi d'angle, comportent une première famille composée de façon classique d'un couple d'engrenages, chacun d'entre eux étant respectivement lié à l'axe du treuil et à l'axe de la manivelle, ou appartiennent à une seconde famille mettant en oeuvre une série de cardans permettant de renvoyer la manoeuvre entre les deux axes selon un angle voisin de 90°.

Quelle que soit la solution technologique utilisée, les dispositifs connus ne permettent pas de moduler en fonction de l'utilisateur et du poids du tablier, l'effort à exercer sur la tringle de la manivelle.

Les systèmes à cardans ont un rendement mécanique médiocre, qui ne facilite pas la manoeuvre du volet roulant, en raison de la présence éventuelle de points durs durant la course du tablier.

Par ailleurs, les dispositifs connus appartenant à la seconde famille comportent généralement un couple de pignons coniques qui ne permettent qu'un seul rapport de réduction entre l'axe d'entrée lié à la manivelle et l'axe de sortie solidaire de l'axe de manoeuvre du tablier. L'utilisation des pignons coniques offre l'avantage d'obtenir un rendement mécanique élevé, mais au détriment de la sécurité d'utilisation lors de la manoeuvre. En effet, ce type d'entraînement n'est pas irréversible et dans le cas de la manoeuvre d'un tablier de masse importante, il se peut que le propre poids du tablier entraîne en rotation le dispositif de manoeuvre et par voie de conséquence, la manivelle et ceci malgré le choix d'un rapport de réduction approprié.

On connaît par le brevet FR-2 621 644, un mécanisme de transmission à pignons coniques associé à un système d'irréversibilité et à un système de butées de fin de course, installées sur chaque pignon conique, pour la manoeuvre d'un tablier de volet roulant. Ce mécanisme présente toutes les caractéristiques du préambule de la première revendication.

La présente invention vise donc à pallier ces inconvénients, en proposant un dispositif de renvoi d'angle qui offre pour un même boîtier plusieurs rapports de démultiplication et qui comporte, d'une part un fin de course qui évite l'enroulement du tablier à l'envers lorsque celui-ci atteint sa position basse dans les coulisses du volet et d'autre part un système de frein qui limite l'amplitude de la rotation de la manivelle.

A cet effet, le dispositif de renvoi d'angle, comprenant un système de fin de course, un système d'irréversibilité, un bâti comportant un couple d'engrenages formé d'un pignon conique et d'une roue dentée, le pignon conique étant connecté à l'axe de la manivelle par l'intermédiaire d'un système de frein, le couple d'engrenages étant pourvu par ailleurs dudit système de fin de course, est caractérisé en ce que les caractéristiques du pignon conique et de la roue dentée sont choisies de manière à offrir des rapports de réduction différents, l'axe de ladite roue dentée étant monté dans le bâti par l'intermédiaire d'orifices prévus dans la partie supérieure du bâti, l'engrènement dudit pignon conique sur ladite roue selon un diamètre primitif de fonctionnement impliquant, en fonction du rapport de réduction choisi, un déplacement de la roue pour positionner son axe dans l'un desdits orifices.

D'autres caractéristiques et avantages de la présente invention ressortiront de la description faite ci-après, en référence aux dessins annexés qui en illustrent un exemple de réalisation dépourvu de tout caractère limitatif. Sur les figures :

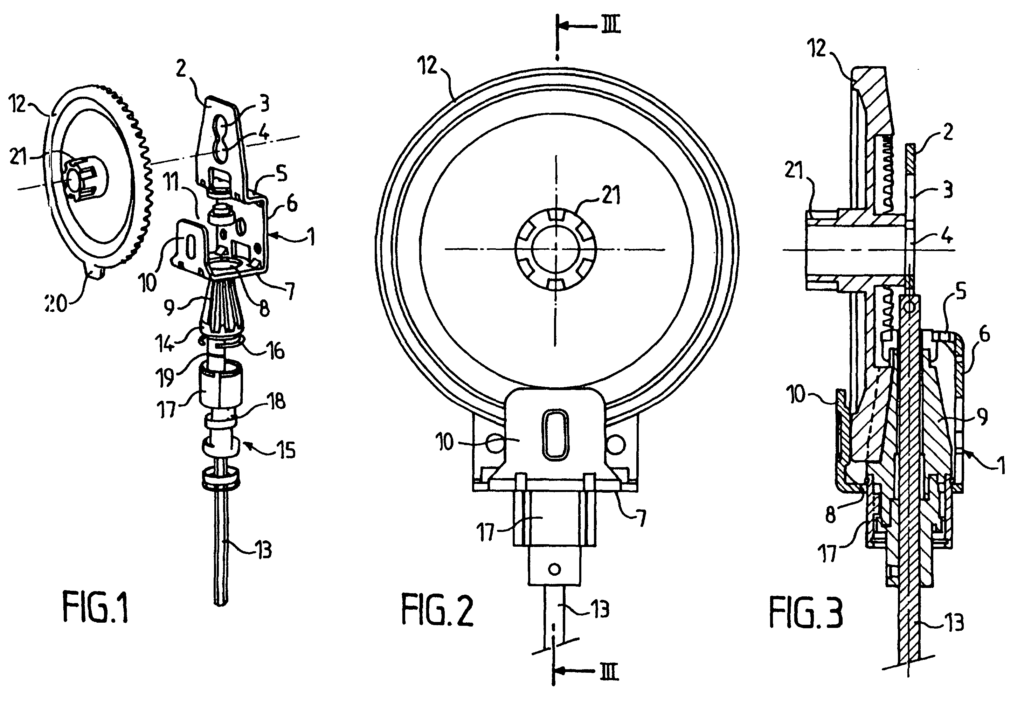

- la figure 1 est une vue en perspective et en éclaté du dispositif objet de l'invention ;
- la figure 2 est une vue en élévation frontale du dispositif objet de l'invention ;
- la figure 3 est une vue en coupe et en élévation latérale de la figure 2.

Selon un mode préféré de réalisation du dispositif de renvoi d'angle objet de l'invention, celui-ci comporte un bâti 1 obtenu par emboutissage d'une plaque métallique qui présente une patte 2 en saillie pourvue d'orifices sécants 3, 4, notamment au nombre de deux, devant permettre le montage d'axes de roues ou de pignons et qui s'étend selon une direction sensiblement parallèle à l'axe solidaire de la manivelle.

L'une des extrémités de cette patte en saillie est pliée selon une direction sensiblement perpendiculaire, de manière à former un rebord 5 qui est relié, par pliage, à une autre partie 6 formant le bâti 1, cette zone s'étendant également selon une direction coplanaire à la patte 2. Cette zone décalée latéralement se termine par une patte en saillie 7 formant un second rebord, parallèle au premier rebord 5 précédemment décrit. Ce rebord 7 en saillie comporte un orifice 8 sensiblement positionné en son centre et dont le diamètre est compatible pour le passage d'un pignon conique 9.

Le rebord 7 en saillie se termine par une languette 10 qui permet le montage du bâti 1 au sein du caisson du volet roulant.

Le couple d'engrenages permettant le renvoi d'angle entre deux directions sensiblement perpendiculaires comporte un pignon conique 9 qui est logé dans l'espace 11 compris entre les deux rebords 5, 7 du bâti 1 et une roue dentée 12 connectée à la patte 2 formant la partie supérieure du bâti 1.

Selon une caractéristique avantageuse de l'invention, le pignon conique 9 est creux sur toute sa longueur afin de laisser coulisser la tringle 13 de commande du treuil venant de puis l'opérateur au travers de tout l'ensemble du mécanisme. L'orifice pratiqué à l'intérieur dudit pignon 9 présente une section droite similaire à celle de la tringle 13 et permet grâce au réglage de la course de la tringle 13, une adaptation facile au niveau du chantier en fonction des différentes tailles de caissons, sans nécessiter un ajustement de précision.

Selon encore une autre caractéristique avantageuse de l'invention, le pignon conique 9 comporte au niveau de sa base, une excroissance 14 formant toc pour l'entraînement du système de frein 15, en l'occurrence, le toc de sortie. Ce système de frein est du type décrit dans FR-A- 2 248 742 auquel on peut se référer.

Ce système de frein 15 assure l'anti-retour de la manivelle durant la montée du tablier, et permet le cas échéant, d'une part d'arrêter le tablier dans toutes ses positions (position haute, position quelconque), et d'autre part de provoquer le freinage du tablier durant sa descente et en fonction de l'équipement du volet, d'assurer le blocage en cas d'utilisation d'un verrou automatique.

Ce système de frein 15 est constitué essentiellement de quatre éléments :
- un élément 16 déformable élastiquement, notamment du type ressort à spirale, à section carrée ;
- une cloche 17;
- un toc d'entrée 18 ou toc entraîneur ;
- un toc de sortie 19 ou toc entraîné.

C'est l'élément 16 déformable élastiquement qui constitue la garniture de frein du système. En effet, suivant son état de compression, il assure ou non le freinage par rapport à la cloche 17 qui est l'élément fixe.

Le toc d'entrée 18 doit assurer une fonction de débrayage du ressort 16 par rapport à la cloche 17 et est donc lié à la manivelle.

Par contre, le toc de sortie 19 assure quant à lui une fonction de serrage de la face externe des spires formant le ressort 16 sur la paroi interne de la cloche 17, et comme nous l'avons vu précédemment, ce toc de sortie est connecté au pignon conique.

Selon une autre caractéristique avantageuse de l'invention, le premier pignon 9, notamment conique, solidaire de la manivelle par l'intermédiaire du système de frein 15, comporte sur sa paroi externe, préférentiellement au niveau de sa base, entre deux dents, une excroissance de matière 14 permettant de réaliser, avec celle 20 prévue sur le second engrenage 12 du renvoi d'angle (décrit ci-après), un fin de course.

Selon encore une autre caractéristique de l'invention, le dispositif comporte une roue dentée 12 qui engrène sur le premier pignon conique 9 solidaire de la tringle connectée à la manivelle et qui présente préférentiellement une denture conique et à sa périphérie un ergot 20 qui vient en butée contre l'excroissance 14 pratiquée à la base du premier pignon 9. Ce couple de butée 14 et 20 entre les deux engrenages 9 et 12 réalise un système de fin de course.

Selon une caractéristique avantageuse de l'invention, les nombres de dents des deux engrenages 9 et 12 sont premiers entre eux de manière à ne faire rencontrer les deux butées 14 et 20 qu'à une seule position du tablier, correspondant en fait à un blocage en position basse de celui-ci, évitant l'enroulement du tablier à l'envers du point bas.

En choisissant un nombre de dents pour un couple formé du pignon conique 9 et de la roue 20, on définit pour chaque ensemble un rapport de réduction.

Pour passer d'un modèle à l'autre, seul l'ensemble pignon conique 9 et roue 12 est changé. L'engrènement entre le pignon conique 9 et la roue 12 s'effectue selon un diamètre primitif de fonctionnement qui impose, en fonction du rapport de réduction choisi, un déplacement longitudinal de la roue 12 dans les orifices 3, 4 pratiqués dans la patte 2 en saillie du bâti 1.

Ainsi, selon un premier mode de réalisation correspondant à un rapport de réduction important et donc le recours à une roue dentée 12 de fort diamètre, celle-ci utilisera l'orifice 3 placé en partie supérieure de la patte 2 du bâti 1.

Selon un deuxième et un troisième modes de réalisation, correspondant respectivement à un rapport de réduction moyen et à un rapport de réduction faible, les roues dentées 12 en relation avec ces rapports de réduction utilisent le même orifice 4, qui correspond en fait à l'orifice placé en partie inférieure de la patte 2 du bâti 1.

Etant donné que les deux roues dentées 12 précédemment citées utilisent le trou 4 inférieur du bâti 1 et donc possèdent le même entraxe, il est nécessaire d'adapter le module de chacune des roues.

Ainsi, la roue de moyenne réduction a un module légèrement inférieur à celui de la roue de faible réduction, et le diamètre primitif de ces deux roues est lié par la relation suivante :
le diamètre primitif est égal au module multiplié par le nombre de dents de la roue.

La roue dentée 12 présente sur sa face externe un moyeu 21 permettant sa connexion à l'arbre du tablier du volet roulant.

Le mode d'assemblage du dispositif précédemment décrit dans le bâti 1 est le suivant : les pièces 9, 14, 19, 17, 18 et 15 sont préassemblées entre elles et conforment un sous-ensemble stockable et déterminé par le type de pignon conique choisi.

Au moment de l'assemblage final dans le bâti 1, le sous-ensemble ainsi constitué est inséré par le bas, au travers de l'orifice 8, jusqu'à ce que la partie supérieure du pignon 9 vienne en butée contre le palier supérieur.

Pour immobiliser l'ensemble, on fait glisser un anneau élastique 16 le long du pignon 9 qui vient se placer dans une gorge circulaire pratiquée sur la paroi externe de la cloche 17, cet anneau assurant également l'immobilisation axiale de l'ensemble.

Le maintien en rotation de la cloche 17 est assuré par des cannelures longitudinales, préférentiellement au nombre de quatre, et dont le profil correspond à la forme de l'orifice 8 du bâti 1.

L'invention précédemment décrite offre de multiples avantages, notamment par le choix de trois modèles d'ensemble pignon conique - roue dentée, qui permet à l'utilisateur d'optimiser la vitesse et l'effort de manoeuvre en fonction du poids du tablier.

Le montage du dispositif selon l'invention est facilité dans l'environnement du volet roulant car pour un même gabarit de châssis et un même système de frein, il existe en fait trois rapports de réduction différents.

Il demeure bien entendu que la présente invention n'est pas limitée aux exemples de réalisation décrits et représentés ci-dessus, mais qu'elle en englobe toutes les variantes.

## Revendications

1. Dispositif de renvoi d'angle, comprenant un système de fin de course, un système d'irréversibilité, un bâti (1) comportant un couple d'engrenages (9, 12) formé d'un pignon conique (9) et d'une roue dentée (12), le pignon conique (9) étant connecté à l'axe de la manivelle (13) par l'intermédiaire d'un système de frein (15), le couple d'engrenages (9, 12) étant pourvu par ailleurs dudit système de fin de course, **caractérisé en ce que** les caractéristiques du pignon conique (9) et de la roue dentée (12) sont choisies de manière à offrir des rapports de réduction différents, l'axe de ladite roue dentée (12) étant monté dans le bâti (1) par l'intermédiaire d'orifices (3, 4) prévus dans la partie supérieure du bâti, l'engrènement dudit pignon conique sur ladite roue selon un diamètre primitif de fonctionnement impliquant, en fonction du rapport de réduction choisi, un déplacement de la roue pour positionner son axe dans l'un desdits orifices (3, 4) pratiqués dans la patte (2) en saillie du bâti (1).

2. Dispositif de renvoi d'angle selon la revendication 1, **caractérisé en ce que** le pignon conique (9) est creux sur toute sa longueur afin de laisser coulisser l'axe de la manivelle (13) de commande du treuil venant depuis l'opérateur au travers de tout l'ensemble du mécanisme.

3. Dispositif de renvoi d'angle selon l'une quelconque des revendications précédentes, **caractérisé en ce que** le pignon conique (9) comporte au niveau de sa base, une excroissance (14) formant toc pour l'entraînement du système de frein (15).

4. Dispositif de renvoi d'angle selon l'une quelconque des revendications précédentes, **caractérisé en ce que** le système de frein (15) est constitué essentiellement de quatre éléments :
- un élément (16) déformable élastiquement, notamment du type ressort à spirale, à section carrée ;
- une cloche (17) ;
- un toc d'entrée (18) ;
- un toc de sortie (19).

5. Dispositif de renvoi d'angle selon l'une quelconque des revendications précédentes, **caractérisé en ce qu'**il comporte une roue dentée (12) qui engrène sur le pignon conique (9) et qui présente à sa périphérie un ergot (20) qui vient en butée contre l'excroissance (14) pratiquée à la base du pignon (9), ce couple de butée (14, 20) entre les deux engrenages (9, 12) réalisant le système de fin de course.

6. Dispositif de renvoi d'angle selon l'une quelconque des revendications précédentes, **caractérisé en ce que** les nombres de dents des deux engrenages (9, 12) sont premiers entre eux de manière à ne faire rencontrer les deux butées (14, 20) qu'à une seule position du tablier.

7. Dispositif de renvoi d'angle selon l'une quelconque des revendications précédentes, **caractérisé en ce que** les pièces (9, 14, 19, 17, 18 et 15) constituant un sous-ensemble, préalablement introduites au travers de l'orifice (8) du bâti (1), sont immobilisées axialement à l'aide d'un anneau élastique qui coopère au niveau d'une gorge circulaire pratiquée sur la paroi externe de la cloche (17).

## Patentansprüche

1. Kegelrad-Winkelgetriebe mit einer Verriegelung für die Endstellung, nämlich ein System zur Verhinderung der Bewegungsumkehr, und einem Trägerelement (1), das ein Zahnradpaar (9,12), das aus einem Kegelrad (9) und einem Zahnrad (12) gebildet wird, aufweist, wobei das Kegelrad (9) über ein Bremssysiem (15) mit der Achse der Kurbelwelle (13) verbunden ist und das Zahnradpaar (9,12) außerdem mit der Verriegelung für die Endstellung versehen ist,
**dadurch gekennzeichnet,**
**dass** die Eigenschaften des Kegelrades (9) und des Zahnrades (12) so gewählt sind, dass sie unterschiedliche Untersetzungen ermöglichen, die Achse des Zahnrades (12) über im oberen Abschnitt des Trägerelementes angeordnete Öffnungen (3,4) an dem Trägerelement (1) befestigt ist, und die Verzahnung zwischen dem Kegelrad und dem Zahnrad auf einem Teilkreisdurchmesser erfolgt, wodurch in Abhängigkeit der gewählten Untersetzung eine Verschiebung des Zahnrads hervorgerufen wird, um seine Achse in den Öffnungen (3,4) zu positionieren, die in dem Befestigungseisen (2), das vom Trägerelement (1) vorspringt, ausgenommen sind.

2. Kegelrad-Winkelgetriebe nach Anspruch 1,
**dadurch gekennzeichnet,**
**daß** das Kegelrad (9) über seine gesamte Höhe hohl ausgebildet ist, damit die Achse der Kurbelwelle (13) der vom Bediener betätigten Winde durch die gesamte Anordnung des Mechanismus hindurch gleiten kann.

3. Kegelrad-Winkelgetriebe nach einem der vorhergehenden Ansprüche,
**dadurch gekennzeichnet,**
**daß** das Kegelrad (9) im Bereich seiner Grundfläche eine Ausstülpung (14) aufweist, die einen Mitnehmer zum Antrieb des Bremssystems (15) bildet.

4. Kegelrad-Winkelgetriebe nach einem der vorhergehenden Ansprüche,
**dadurch gekennzeichnet,**
**daß** das Bremssystem (15) im wesentlichen aus vier Bauteilen:
- einem elastisch verformbaren Element (16), insbesondere von der Art einer Flachbandspiralfeder;
- einer Hülse (17);
- einem Eingangsmitnehmer (18); und
- einem Ausgangsmitnehmer (19)
ausgebildet ist.

5. Kegelrad-Winkelgetriebe nach einem der vorhergehenden Ansprüche,
**gekennzeichnet durch**
ein Zahnrad (12), das mit dem Kegelrad (9) verzahnt ist und auf seinem Umfang einen Nocken (20) aufweist, der gegen die Ausstülpung (14) an der Grundfläche des Kegelrads (9) zum Anschlag kommt, wobei dieses Anschlagspaar (14,20) zwischen den zwei Komponenten des Zahnradpaars (9,12) die Verriegelung für die Endstellung ausbildet.

6. Kegelrad-Winkelgetriebe nach einem der vorhergehenden Ansprüche,
**dadurch gekennzeichnet,**
**daß** die Anzahl der Zähne der zwei Komponenten des Zahnradpaars (9,12) primär jeweils so gewählt ist, daß die zwei Anschläge (14,20) nur in einer einzigen Stellung des Rolladenpanzers zusammenfallen.

7. Kegelrad-Winkelgetriebe nach einem der vorhergehenden Ansprüche,
**dadurch gekennzeichnet,**
**daß** die Bestandteile (9,14,19,17,18 und 15), die eine Untereinheit ausbilden und vorab durch die Öffnung (8) des Trägerelements (1) hindurch eingefügt werden, in Axialrichtung mittels eines elastischen Rings fixiert sind, der mit eine kreisförmigen Rille in der Außenwand der Hülse (17) kooperiert.

## Claims

1. Bevel gear drive, comprising an end-of-travel system, an irreversibility system, a frame (1) comprising a pair of gears (9, 12) formed by a bevel wheel (9) and a toothed wheel (12), the bevel wheel (9) being connected to the axis of the crank (13) via a brake system (15), the pair of gears (9, 12) also being provided with said end-of-travel system, **characterised in that** the characteristics of the bevel wheel (9) and of the toothed wheel (12) are selected so as to offer different reduction ratios, the axis of said toothed wheel (12) being mounted in the frame (1) via orifices (3, 4) provided in the upper portion of the frame, the meshing of said bevel wheel with said wheel over a primitive operating diameter involving, as a function of the selected reduction ratio, a displacement of the wheel so as to position its axis in one of said orifices (3, 4) made in the tab (2) projecting from the frame (1).

2. Bevel gear drive according to claim 1, **characterised in that** the bevel wheel (9) is hollow over its entire length so as to allow the axis of the control crank (13) for the winch coming from the operator to slide through the entire mechanism.

3. Bevel gear drive according to any one of the preceding claims, **characterised in that** the bevel wheel (9) comprises, in the region of its base, a protuberance (14) forming a catch for driving the brake system (15).

4. Bevel gear drive according to any one of the preceding claims, **characterised in that** the brake system (15) consists essentially of four elements:
- an elastically deformable element (16), in particular of the square section spiral spring type;
- a bell (17);
- an inlet catch (18);
- an outlet catch (19).

5. Bevel gear drive according to any one of the preceding claims, **characterised in that** it comprises a toothed wheel (12) which meshes with the bevel wheel (9) and has, at its periphery, a lug (20) which abuts against the protuberance (14) made at the base of the wheel (9), this pair of abutments (14, 20) between the two gears (9, 12) producing the end-of-travel system.

6. Bevel gear drive according to any one, of the preceding claims, **characterised in that** the numbers of teeth of the two gears (9, 12) are prime numbers among themselves so that the two abutments (14, 20) meet only a single position of the panel.

7. Bevel gear drive according to any one of the preceding claims, **characterised in that** the parts (9, 14, 19, 17, 18 and 15) constituting a sub-assembly and previously introduced through the orifice (8) of the frame (1) are axially immobilised by means of an elastic ring which cooperates at the level of a circular groove made on the external wall of the bell (17).
